# EUROPÄISCHE PATENTSCHRIFT

(11) **EP 1 934 283 B1**
(45) Veröffentlichungstag und Bekanntmachung des Hinweises auf die Patenterteilung: **30.12.2020**
(21) Anmeldenummer: 06792209.6
(22) Anmeldetag: 22.09.2006
(51) Int. Cl.: C08L 69/00

(54) **LICHT STREUENDE KUNSTSTOFFZUSAMMENSETZUNG MIT HOHER HELLIGKEIT UND DEREN VERWENDUNG IN FLACHBILDSCHIRMEN**
LIGHT-DIFFUSING PLASTIC COMPOSITION OF HIGH LUMINOSITY AND THE USE THEREOF IN FLAT SCREENS
COMPOSITION DE PLASTIQUE DIFFUSANT LA LUMIERE ET A FORTE LUMINOSITE, ET UTILISATION DE LADITE COMPOSITION DANS DES ECRANS PLATS

(30) Priorität: 05.10.2005 DE 102005047614
(43) Veröffentlichungstag der Anmeldung: 25.06.2008
(73) Patentinhaber: Covestro Deutschland AG, 51373 Leverkusen (DE)
(72) Erfinder: PUDLEINER, Heinz, 47800 Krefeld (DE); MEYER, Klaus, 41539 Dormagen (DE); NICKEL, Jörg, 41539 Dormagen (DE); RÜDIGER, Claus, 47829 Krefeld (DE)
(74) Vertreter: Levpat
(86) Internationale Anmeldenummer: PCT/EP2006/009200
(87) Internationale Veröffentlichungsnummer: WO 2007/039130

(56) Entgegenhaltungen:
- EP-A1- 0 342 283
- EP-A1- 0 634 445
- DE-A1- 10 001 412
- DATABASE WPI Week 199131 Derwent Publications Ltd., London, GB; AN 1991-225864 XP002415194 & JP 03 143950 A (NIPPON GE PLASTICS) 19. Juni 1991 (1991-06-19)

## Beschreibung

Die vorliegenden Erfindung betrifft Folien , wie in den vorliegenden Ansprüchen beschrieben, aus einem transparenten Kunststoff, besonders Polycarbonat, und transparenten polymeren Teilchen mit einer vom Matrixmaterial unterschiedlichen optischen Dichte sowie die Verwendung dieser Kunststoffzusammensetzung für Folien, im Besonderen für Diffuser-Filme in Flachbildschirmen.

Aus dem Stand der Technik sind Licht streuende transluzente Erzeugnisse aus transparenten Kunststoffen mit verschiedenen Licht streuenden Zusatzstoffen und daraus hergestellte Formteile bereits bekannt.

In der US 2004/0066645 A1 werden allgemein Licht streuende Materialien beansprucht, die 0,2 bis 5% Licht streuende Teilchen enthalten, und die Lichttransmission größer als 70% und der Haze wenigstens 10% sind.

Das Streu-Additiv hat einen mittleren Durchmesser von 3 bis 10 µm.

In JP 07-090167 wird ein Licht streuender Kunststoff beansprucht, der aus 1 bis 10% Teilchen, die einen Brechungsindex von weniger als 1,5 und eine Teilchengröße von 1 bis 50 µm haben, und 90 bis 99% eines aromatischen Polycarbonats besteht, wobei sich die Teilchen im wesentlichen nicht in dem aromatischen Polycarbonat lösen.

Als Streu-Additive werden Acrylat-, Polystyrol-, Glas-, Titandioxid oder Calciumcarbonat-Partikel eingesetzt.

Als Anwendung werden LCD erwähnt.

In der EP 0 269 324 B1 wird im 1. Anspruch die Streu-Additiv-Zusammensetzung beschrieben, in den Unteransprüchen aber auch Licht streuende thermoplastische Polymerzusammensetzungen mit 0,1 bis 10% Streuadditiv.

In diesem Zusammenhang wird die Morphologie der Kern/Schale-Acrylate und der diese enthaltenden Licht streuenden Compounds nicht weiter beschrieben und charakterisiert.

In der EP 0634 445 B1 wird Paraloid EXL 5137 als Streu-Additiv in Kombination mit anorganischen Teilchen u.a. in Polycarbonat ein, wobei 0,001 bis 0,3% dieser Teilchen, z.B. Titandioxid, zu einer verbesserten Alterungsbeständigkeit und damit Farbstabilität beitragen.

Dieser Vorteil wird besonders dann wichtig, wenn Compounds mit hohen Streumittel-Gehalten (> 2%) über längere Zeit (> 500 Stunden) erhöhten Gebrauchstemperaturen (z.B 140°C) ausgesetzt sind.

In JP 2004-053998 werden Licht streuende Polycarbonat-Folien mit einer Dicke von 30 bis 200 µm beschrieben, die aus mehr als 90% Polycarbonat bestehen, eine Lichttransmission von mehr als 90% haben, mindestens eine Seite der Folienoberfläche eine konkav-konvexe Struktur aufweisen, einen Haze von mindestens 50% haben und eine Retardation von weniger als 30nm aufweisen. Als Anwendung für diese optischen Folien werden Diffuser-Filme in Back Light Units beansprucht.

In der Anmeldung werden Diffuser-Folien mit niedriger Doppelbrechung (Retardation < 30 nm, besser sogar < 20 nm) beschrieben und beansprucht, da sie in der BLU höhere Helligkeiten bewirken.

Als Streu-Additive werden 1 bis 10% anorganische Teilchen, z.B. Silikate, Calciumcarbonat oder Talkum, oder organische Teilchen wie vernetzte Acrylate oder Polystyrole mit einem mittleren Durchmesser von 1 bis 25 µm, vorzugsweise von 2 bis 20 µm eingesetzt.

In JP 08-146207 werden optische Diffuser-Filme beschrieben, bei denen auf mindestens einer Seite durch einen Abformprozess die Oberfläche strukturiert wurde. Weiterhin wird eine Folie beansprucht, in der beim Einsatz nur eines transparenten Streu-Additivs, dieses über die Dicke der Folie ungleichmäßig verteilt. Werden zwei oder mehrere Streu-Additive eingesetzt, so können sie gleichmäßig über die Dicke der Folie verteilt sein.

Bei der ungleichmäßigen Verteilung des Streu-Additivs findet eine Anreicherung an der Folienoberfläche statt.

Die eingesetzten Streu-Additive können Acrylat-, Polyethylen-, Polypropylen-, Polystyrol-, Glas-, Aluminiumoxid oder Siliciumdioxid-Teilchen mit einem mittleren Teilchendurchmesser von 1 bis 25 µm sein.

Die Folien können eine Dicke von 100 bis 500 µm haben.

In JP 2004-272189 werden optische Diffuser-Platten mit einer Dicke von 0,3 bis 3 mm beschrieben, wobei Streu-Additive mit einem Teilchendurchmesser von 1 bis 50 µm eingesetzt werden. Weiterhin wird beansprucht, dass in einem Helligkeitsbereich von 5000 bis 6000 Cd/m² die Helligkeitsunterschiede weniger als 3% betragen.

In WO 2004/090587 werden Diffuser-Filme mit einer Dicke von 20 bis 200 µm für den Einsatz in LCD beschrieben, die 0,2 bis 10 % Streu-Additiv enthalten und die wenigstens auf einer Seite einen Glanz von 20 bis 70% aufweisen. Als Streu-Additive, die einen Teilchendurchmesser von 5 bis 30 µm aufweisen, werden vernetzte Silicone, Acrylate oder Talkum eincompoundiert.

In JP 06-123802 werden Diffuser-Filme mit einer Dicke von 100 bis 500 µm für LCD beschrieben, wobei der Brechungsindexunterschied zwischen dem transparenten Basismaterial und den transparenten Licht streuenden Teilchen mindestens 0,05 ist. Dabei ist die eine Seite der Folie glatt, während auf der anderen Seite die Streu-Additive aus der Oberfläche herausstehen und die strukturierte Oberfläche ausbilden.

Die Streu-Additive haben einen Partikeldurchmesser von 10 bis 120 µm.

Die aus dem Stand der Technik bekannten Diffuser-Filme und -platten weisen allerdings eine unbefriedigende Helligkeit (Brightness) auf, insbesondere im Zusammenspiel mit dem üblicherweise in einer sogenannten Backlight-Unit verwendeten Foliensatz. Um die Eignung der lichtstreuenden Platten für sogenannte Backlight-Units für LCD-Flachbildschirme zu beurteilen, muss die Helligkeit (Brightness) des Gesamtsystems betrachtet werden.

Grundsätzlich weist eine Backlight-Unit (Direct Light System) den nachfolgend beschriebenen Aufbau auf. Sie besteht in der Regel aus einem Gehäuse, in dem je nach Größe der Backlight-Unit eine unterschiedliche Anzahl an Leuchtstoffröhren, sogen. CCFL (Cold Cathode Fluorescent Lamp) angeordnet sind. Die Gehäuseinnenseite ist mit einer Licht reflektierenden Oberfläche ausgestattet. Auf diesem Beleuchtungssystem liegt die Diffuserplatte auf, die eine Dicke von 1 bis 3 mm aufweist, bevorzugt eine Dicke von 2 mm. Auf der Diffuserplatte befindet sich ein Satz von Folien, die folgende Funktionen haben können: Lichtstreuung (Diffuserfolien), Circularpalarisatoren, Fokussierung des Lichtes in Vorwärtsrichtung durch sogn. BEF (Brighness Enhancing Film) und Linearpolarisatoren. Die linear polarisierende Folie liegt direkt unter dem darüber befindlichen LCD-Display.

Lichtstreuende Kunststoffzusammensetzungen in optischen Anwendungen enthalten herkömmlich anorganische oder organische Partikel mit einem Durchmesser von 1 bis 50 Mikrometer, in einigen Fällen sogar bis 120 µm, d.h. sie enthalten Streuzentren, die sowohl für die diffusiven als auch für die fokussierenden Eigenschaften verantwortlich sind.

Als transparent Streupigmente können dabei grundsätzlich alle Acrylate eingesetzt werden, die über eine ausreichend hohe thermische Stabilität bis mindestens 300 °C verfügen, um bei den Verarbeitungstemperaturen des transparenten Kunststoff, bevorzugt Polycarbonat, nicht zersetzt zu werden. Darüber hinaus dürfen Pigmente über keine Funktionalitäten verfügen, die zu einem Abbau der Polymerkette des Polycarbonats führen.

### Dazu gehören Kern-Schale Acrylate der folgenden Klassen:

So können z. B. Paraloid® der Fa. Röhm & Haas oder Techpolymer® der Fa. Sekisui sehr gut zur Pigmentierung von tranparenten Kunststoffen eingesetzt werden. Aus dieser Produktlinie stehen eine Vielzahl verschiedener Typen zur Verfügung. Bevorzugt werden Kemschale-Acrylate aus der Paraloid-Reihe eingesetzt.

Es wurde nun völlig überraschend gefunden, dass Kunststoffzusammensetzungen, die konventionelle Mikrometer große Teilchen, insbesondere so genannte Kern-Schale Acrylate und möglichst wenig nanoskalige Teilchen enthalten, aufgrund der Helligkeitseigenschaften und gleichzeitig hoher Lichtstreuung für Back Light Units geeignet sind. Dieser Effekt zeigt sich noch verstärkt in Zusammenhang mit dem in einer Backlight-Unit (BLU) typischerweise verwendeten Foliensatz.

In keiner der Patentschriften des Standes der Technik wird auf die Ausbildung einer nanoskaligen Phase entsprechend der erfindungsgemäßen Kunststoffzusammensetzung eingegangen. Die Bedeutung dieser Partikel für die optischen Eigenschaften der erfindungsgemäßen Kunststoffzusammensetzung wird daher auch nicht erwähnt.

In der Regel gilt, dass Kunststoffzusammensetzungen mit Licht streuenden Additiven mit mittleren Teilchengrößen unterhalb von 500 nm keinen wesentlichen Einfluss auf die optischen Eigenschaften von Folien haben.

Wie nun überraschenderweise gefunden wurde, werden sehr gute Helligkeiten der Back Light Unit erhalten, wenn der Anteil der Teilchen mit mittlerem Teilchendurchmesser von 80 bis 200 nm unterhalb von 20 Teilchen pro 100 µm² Oberfläche der Kunststoffzusammensetzung, bevorzugt unterhalb von 10 Teilchen pro 100 µm², besonders bevorzugt unterhalb von 5 Teilchen pro 100 µm², liegt. Die Bestimmung der Anzahl der Teilchen pro Oberfläche erfolgt dabei durch eine Untersuchung der Oberfläche mittels Atomic Force Microscopy (AFM). Diese Methode ist dem Fachmann vertraut und wird in den Ausführungsbeispielen näher erläutert. Dies bedeutet, dass die Kunststoffzusammensetzung höchstens 500 ppm, bevorzugt weniger als 300 ppm, besonders bevorzugt weniger als 100 ppm dieser nanoskaligen Teilchen aufweist. Der Ausdruck "ppm" ist hierbei auf die Zusammensetzung bezogen.

Gegenstand dieser Erfindung sind daher Kunststoffzusammensetzungen, die transparente polymere Teilchen mit einem vom Matrixmaterial unterschiedlichen Brechungsindex enthalten und charakterisiert sind durch einen Anteil von nanoskaligen Teilchen mit mittleren Teilchendurchmesser von 80 bis 200 nm, wobei der Anteil der nanoskaligen Teilchen unterhalb von 20 Teilchen pro 100 µm² Oberfläche der Kunststoffzusammensetzung, bevorzugt unterhalb von 10 Teilchen pro 100 µm², besonders bevorzugt unterhalb von 5 Teilchen pro 100 µm² liegt.

Die vorliegenden Erfindung betrifft Folien , wie in den vorliegenden Ansprüchen beschrieben, aus eine Kunststoffzusammensetzung enthaltend 90 bis 99,95 Gewichts-% eines transparenten Kunststoffs, bevorzugt Polycarbonat und 0,01 bis 10 Gewichts-% polymerer, transparenter Teilchen, wobei diese polymeren Teilchen eine Teilchengröße im wesentlichen zwischen 1 und 50 µm aufweisen, und bis zu höchstens 500 ppm polymerer, transparenter Teilchen mit einer Teilchengröße von 80 bis 200 nm.

Ein weiterer Gegenstand dieser Erfindung ist ein Verfahren zur Herstellung der erfindungsgemäßen Kunststoffzusammensetzung.

Die erfindungsgemäßen Kunststoffzusammensetzungen werden bevorzugt durch thermoplastische Verarbeitung hergestellt und weiterverarbeitet. Durch die Scherung in der thermoplastischen Verarbeitung werden die nanoskaligen polymeren Teilchen gebildet. Dieser Bildungmechanismus wird durch AFM-Untersuchungen an den extrudierten Folien gezeigt. Zur Absicherung der Ergebnisse wurden drei Proben pro Material präpariert und jeweils drei Stellen auf ihre Morphologie untersucht. Bevorzugt werden Kern-/Schale-Acrylate eingesetzt, da sie die erfindungsgemäßen Kunststoffzusammensetzungen liefern.

Ein weiterer Gegenstand dieser Erfindung ist die Verwendung der erfindungsgemäßen Kunststoffzusammensetzung für Diffuser-Folien von Flachbildschirmen, insbesondere bei der Hinterleuchtung von LCD-Displays.

Die Diffuser-Folien, hergestellt aus den erfindungsgemäßen Kunststoffzusammensetzungen, weisen eine hohe Lichttransmission bei gleichzeitig hoher Lichtstreuung auf und können beispielsweise in den Beleuchtungssystemen von Flachbildschirmen (LCD-Bildschirmen) zum Einsatz kommen. Hier ist eine hohe Lichtstreuung bei gleichzeitiger hoher Lichttransmission und Fokussierung des Lichtes in Richtung auf den Betrachter von entscheidender Bedeutung. Das Beleuchtungssystem solcher Flachbildschirme kann entweder mit seitlicher Lichteinkopplung erfolgen (Edge light System) oder bei größeren Bildschirmgrößen, bei denen die seitliche Lichteinkopplung nicht mehr ausreichend ist, über eine Backlight-Unit (BLU), bei der die direkte Beleuchtung hinter der Diffuser-Folie durch diese möglichst gleichmäßig verteilt werden muss (Direct Light System).

Als Kunststoffe für die Kunststoffzusammensetzung kommen alle transparenten Thermoplaste in Frage: Polyacrylate, Polymethacrylate (PMMA; Plexiglas® von der Fa. Röhm), Cycloolefin-Copolymere (COC; Topas® von der Fa. Ticona; Zenoex® von der Fa. Nippon Zeon oder Apel® von der Fa. Japan Synthetic Rubber), Polysulfone (Ultrason@ von der BASF oder Udel® von der Fa. Solvay), Polyester, wie z.B. PET oder PEN, Polycarbonat, Polycarbonat/Polyester-Blends, z.B. PC/PET, Polycarbonat/Polycyclohexylmethanolcyclohexandicarboxylat (PCCD; Sollx® von der Fa GE), Polycarbonat/PBT (Xylex®).

Bevorzugt werden Polycarbonate eingesetzt.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte M̅_{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren und wird im folgenden beispielhaft an dem Phasengrenzflächenverfahren beschrieben.

Die Herstellung der Polycarbonate erfolgt u.a. nach dem Phasengrenzflächenverfahren. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Geeignete Diphenole sind z.B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der franzoesischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben

Daneben ist die Herstellung von Polycarbonaten auch aus Diarylcarbonaten und Diphenolen nach dem bekannten Polycarbonatverfahren in der Schmelze, dem so genannten Schmelzumesterungsverfahren, möglich, das z.B. in WO-A 01/05866 und WO-A 01/05867 beschrieben ist. Daneben werden Umesterungsverfahren (Acetatverfahren und Phenylesterverfahren) beispielsweise in den US-A 34 94 885, 43 86 186,46 61 580, 46 80 371 und 46 80 372, in den EP-A 26 120, 26 121, 26 684, 28 030, 39 845, 39 845, 91 602, 97 970, 79 075, 14 68 87, 15 61 03, 23 49 13 und 24 03 01 sowie in den DE-A 14 95 626 und 22 32 977 beschrieben.

Geeignet sind sowohl Homopolycarbonate als auch Copolycarbonate. Zur Herstellung erfindungsgemäßer Copolycarbonate als Komponente A können auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind bekannt (s. beispielsweise aus US-Patent 3 419 634) bzw. nach literaturbekannten Verfahren herstellbar. Die Herstellung Polydiorganosiloxanhaltiger Copolycarbonate wird z. B. in DE-OS 33 34 782 beschrieben.

Ferner sind Polyestercarbonate und Block-Copolyestercarbonate geeignet, besonders wie sie in der WO 2000/26275 beschrieben sind. Aromatische Dicarbonsäuredihalogenide zur Herstellung von aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Polydiorganosiloxan-Polycarbonat-Blockcopolymere sind dadurch gekennzeichnet, dass sie in der Polymerkette einerseits aromatische Carbonatstruktureinheiten (1) und andererseits Aryloxyendgruppen-haltige Polydiorganosiloxane (2) enthalten.

Derartige Polydiorganosiloxan-Polycarbonat-Blockcopolymere sind z. B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man alpha-, omega-Bishydroxyaryloxyendgruppen-haltige Polydiorganosiloxane zusammen mit anderen Diphenolen, gegebenenfalls unter Mitverwendung von Verzweigern in den üblichen Mengen, z. B. nach dem Zweiphasengrenzflächenverfahren (s. dazu H. Schnell, Chemistry and Physics of Polycarbonates Polymer Rev. Vol. IX, Seite 27 ff, Interscience Publishers New York 1964) umsetzt, wobei jeweils das Verhältnis der bifunktionellen phenolischen Reaktanten so gewählt wird, dass daraus der erfindungsgemässe Gehalt an aromatischen Carbonatstruktureinheiten und Diorganosiloxy-Einheiten resultiert.

Derartige alpha-, omega-Bishydroxyaryloxyendgruppen-haltige Polydiorganosiloxane sind z. B. aus US 3 419 634 bekannt.

Bei den bevorzugten erfindungsgemäß einzusetzenden polymeren Teilchen auf Acrylatbasis mit einer Kern-Schale-Morphologie handelt es sich beispielsweise und bevorzugt um solche, wie sie in EP-A 634 445 offenbart werden.

Die polymeren Teilchen haben bevorzugt einen Kern aus einem kautschukartigen Vinylpolymeren. Das kautschukartige Vinylpolymere kann ein Homo- oder Copolymeres von einem beliebigen der Monomeren sein, die wenigstens eine ethylenartig ungesättigte Gruppe besitzen und die dem Fachmann auf dem Gebiet bekanntermaßen Additionspolymerisation unter den Bedingungen der Emulsionspolymerisation in einem wässrigen Medium eingehen. Solche Monomere sind in US 4 226 752, Spalte 3, Zeilen 40 - 62, aufgelistet.

Am meisten bevorzugt enthalten die polymeren Teilchen einen Kern aus kautschukartigem Alkylacrylatpolymeren, wobei die Alkylgruppe von 2 bis 8 Kohlenstoffatome aufweist, wahlweise copolymerisiert mit von 0 bis 5 % Vernetzer und von 0 bis 5 % Pfropfvernetzer, bezogen auf das Gesamtgewicht des Kerns. Das kautschukartige Alkylacrylat ist bevorzugt mit bis zu 50 % von einem oder mehreren copolymerisierbaren Vinylmonomeren copolymerisiert, beispielsweise den zuvor genannten. Geeignete vernetzende und pfropfvernetzende Monomere sind dem Fachmann auf dem Gebiet wohlbekannt, und es sind bevorzugt solche, wie sie in EP-A 0 269 324 beschrieben sind.

Die polymeren Teilchen sind nützlich, um den transparenten Kunststoffen, bevorzugt Polycarbonat, Lichtstreueigenschaften zu erteilen. Der Brechungsindex n von Kern und des Mantels/der Mäntel der polymeren Teilchen liegt bevorzugt innerhalb von +/-0,25 Einheiten, mehr bevorzugt innerhalb +/-0,18 Einheiten, am meisten bevorzugt innerhalb +/-0,12 Einheiten des Brechungsindexes des Polycarbonats. Der Brechungsindex n des Kerns und des Mantels/der Mäntel liegt bevorzugt nicht näher als +/-0,003 Einheiten, mehr bevorzugt nicht näher als +/-0,01 Einheiten, am meisten bevorzugt nicht näher als +/-0,05 Einheiten bei dem Brechungsindex des Polycarbonats. Der Brechungsindex wird entsprechend der Norm ASTM D 542-50 und/oder DIN 53 400 gemessen.

Die polymeren Teilchen haben im Allgemeinen einen Durchschnittsteilchendurchmesser von wenigstens 0,5 Mikrometer, bevorzugt von wenigstens 1 Mikrometer bis höchstens 100 µm, mehr bevorzugt von 2 bis 50 Mikrometer, am meisten bevorzugt von 2 bis 15 Mikrometer. Unter "Durchschnittsteilchendurchmesser" ist der Zahlendurchschnitt zu verstehen. Bevorzugt haben wenigstens 90 %, am meisten bevorzugt wenigstens 95 % der polymeren Teilchen einen Durchmesser von mehr als 2 Mikrometer. Die polymeren Teilchen sind ein freifließendes Pulver, bevorzugt in kompaktierter Form, d.h. zu Pellets gepresst, auch zur Staubverminderung.

Die polymeren Teilchen können in bekannter Weise hergestellt werden. Im Allgemeinen wird wenigstens eine Monomerenkomponente des Kernpolymeren der Emulsionspolymerisation unter Bildung von Emulsionspolymerteilchen unterworfen. Die Emulsionspolymerteilchen werden mit derselben oder einer oder mehreren anderen Monomerenkomponenten des Kernpolymeren gequollen, und das/die Monomere werden innerhalb der Emulsionspolymerteilchen polymerisiert. Die Stufen des Quellens und Polymerisierens können wiederholt werden, bis die Teilchen auf die gewünschte Kerngröße angewachsen sind. Die Kernpolymerteilchen werden in einer zweiten wässrigen Monomerenemulsion suspendiert, und es wird ein Polymermantel aus dem/den Monomeren auf die Polymerteilchen in der zweiten Emulsion polymerisiert. Ein Mantel oder mehrere Mäntel können auf dem Kernpolymeren polymerisiert werden. Die Herstellung von Kern/Mantelpolymerteilchen ist in EP-A 0 269 324 und in den US-Patenten 3,793,402 und 3,808,180 beschrieben.

Ferner zeigt sich überraschenderweise, dass durch die Verwendung einer kleinen Menge optischer Aufheller die Brightnesswerte weiter erhöht werden können.

Eine Ausführungsform der Erfindung stellt daher eine erfindungsgemäße Kunststoffzusammensetzung dar, die zusätzlich 0,001 bis 0,2 Gewichts-%, bevorzugt etwa 1000 ppm eines optischen Aufhellers der Klasse Bis-Benzoxazole, Phenylcoumarine oder Bis-Styrylbiphenyle enthalten kann.

Ein besonders bevorzugter optischer Aufheller ist Uvitex OB, der Fa. Ciba Spezialitätenchemie.

Die erfindungsgemäßen Kunststoffzusammensetzungen können durch Extrusion hergestellt werden.

Zur Extrusion wird ein Polycarbonat-Granulat dem Extruder zugeführt und im Plastifizierungssystem des Extruders aufgeschmolzen. Die Kunststoffschmelze wird durch eine Breitschlitzdüse gedrückt und dabei verformt, im Walzenspalt eines Glättkalanders in die gewünschte endgültige Form gebracht und durch wechselseitige Kühlung auf Glättwalzen und der Umgebungsluft formfixiert. Die zur Extrusion verwendeten Polycarbonate mit hoher Schmelzeviskosität werden üblicherweise bei Schmelzetemperaturen von 260 bis 320°C verarbeitet, entsprechend werden die Zylindertemperaturen des Plastifizierzylinders sowie Düsentemperaturen eingestellt.

Die für die Strukturierung der Folienoberfläche verwendeten Gummi-Walzen werden in der DE 32 28 002 (oder dem US-Äquivalent 4 368 240) der Fa. Nauta Roll Corporation offenbart.

Durch Einsatz von einem oder mehrerer Seitenextruder und geeigneten Schmelzeadaptern vor der Breitschlitzdüse lassen sich Polycarbonatschmelzen verschiedener Zusammensetzung übereinander legen und somit Folien coextrudieren (siehe beispielsweise EP-A 0 110 221 und EP-A 0 110 238).

Sowohl die Basisschicht als auch die gegebenenfalls vorhandene(n) Coextrusionsschicht(en) der erfindungsgemäßen Formkörper können zusätzlich Additive wie beispielsweise, UV-Absorber sowie andere übliche Verarbeitungshilfsmittel insbesondere Entformungsmittel und Fließmittel sowie die für Polycarbonate üblichen Stabilisatoren insbesondere Thermostabilisatoren sowie Antistatika, optische Aufheller enthalten. In jeder Schicht können dabei unterschiedliche Additive bzw. Konzentrationen von Additiven vorhanden sein.

In einer bevorzugten Ausfuhrungsform enthält die Zusammensetzung der Folie zusätzlich 0,01 bis 0,5 Gewichts-% eines UV-Absorbers der Klassen Benzotriazol-Derivate, Dimere Benzotriazol-Derivate, Triazin-Derivate, Dimere Triazin-Derivate, Diarylcyanoacrylate.

Insbesondere kann die Coextrusionsschicht Anstistatika, UV-Absorber und Entformungsmittel enthalten.

Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosphonit, Bis(2,4-dicumylphenyl)petaerythritoldiphosphit und Triarylphosphit genannt. Besonders bevorzugt sind Triphenylphosphin und Tris-(2,4-di-tert.-butylphenyl)phosphit.

Geeignete Entformungsmittel sind beispielsweise die Ester oder Teilester von ein- bis sechswertigen Alkoholen, insbesondere des Glycerins, des Pentaerythrits oder von Guerbetalkoholen.

Einwertige Alkohole sind beispielsweise Stearylalkohol, Palmitylalkohol und Guerbetalkohole, ein zweiwertiger Alkohol ist beispielsweise Glycol, ein dreiwertiger Alkohol ist beispielsweise Gylcerin, vierwertige Alkohole sind beispielsweise Pentaerythrit und Mesoerythrit, fünfwertige Alkohole sind beispielsweise Arabit, Ribit und Xylit, sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt < 60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Beispiele für geeignete Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Die erfindungsgemäßen Kunststoffzusammensetzungen können zu Polycarbonat-Folien mit einer Dicke von 35 µm bis 1000 µm verarbeitet werden. Je nach Anwendungsgebiet können sie auch dicker sein. Bei den Folien kann es sich auch um Mehrschichtverbunde aus mindestens zwei massiven Formkörpern, beispielsweise Folien, handeln, die durch Extrusion hergestellt wurden. In diesem Fall sind die erfindungsgemäßen Folien aus mindestens zwei Polymerschichten aufgebaut.

Zur Herstellung von Folien durch Extrusion wird das Polycarbonatgranulat dem Fülltrichter eines Extruders zugeführt und gelangt über diesen in das Plastifiziersystem, bestehend aus Schnecke und Zylinder.

Im Plastifiziersystem erfolgt das Fördern und Aufschmelzen des Materials. Die Kunststoffschmelze wird durch eine Breitschlitzdüse gedrückt. Zwischen Plastifiziersystem und Breitschlitzdüse können eine Filtereinrichtung, eine Schmelzpumpe, stationäre Mischelemente und weitere Bauteile angeordnet sein. Die die Düse verlassende Schmelze gelangt auf einen Glättkalander. Zur einseitigen Strukturierung der Folienoberfläche wurde eine Gummi-Walze eingesetzt. Im Walzenspalt des Glättkalanders erfolgt die endgültige Formgebung. Die für die Strukturierung der Folienoberfläche verwendeten Gummi-Walzen werden in der DE 32 28 002 (oder dem US-Äquivalent 4 368 240) der Fa. Nauta Roll Corporation offenbart. Die Formfixierung erfolgt letztendlich durch Abkühlung und zwar wechselseitig auf den Glättwalzen und an der Umgebungsluft. Die weiteren Einrichtungen dienen dem Transport, dem Aufbringen von Schutzfolie, dem Aufwickeln der extrudierten Folien.

Die folgenden Beispiele sollen die Erfindung verdeutlichen, ohne sie jedoch zu beschränken.

### Beispiele

### Beispiel 1

### Compoundierung:

Herstellung des Licht streuenden Compounds mit herkömmlichen Zweischnecken Compoundierextrudern (z.B. ZSK 32) bei für Polycarbonat üblichen Verarbeitungstemperaturen von 250 bis 330°C.

Es wurde ein Master-Batch mit folgender Zusammensetzung hergestellt:
- Polycarbonat Makrolon 3108 550115 der Fa. Bayer MaterialScience AG mit einem Anteil von 80 Gew.-% und
- Kern-Schale-Teilchen mit einem Butadien/Styrol-Kern und einer Methylmethacrylat-Schale Paraloid EXL 5137 der Fa. Rohm & Haas mit einer Teilchengröße von 2 bis 15 µm und einer mittleren Teilchengröße von 8 µm mit einem Anteil von 20 Gew.-%.

### Folienextrusion:

Die verwendete Anlage besteht aus
- einem Extruder mit einer Schnecke von 75 mm Durchmesser (D) und einer Länge von 33xD. Die Schnecke weist eine Entgasungszone auf;
- einer Schmelzepumpe;
- einem Umlenkkopf;
- einer Breitschlitzdüse mit 450 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- Dickenmessung
- einer Einrichtung zum beidseitigen Aufbringen von Schutzfolie;
- einer Abzugseinrichtung;
- Aufwickelstation.

Von der Düse gelangt die Schmelze auf den Glättkalander, dessen Walzen die in der Tabelle 1 genannte Temperatur aufweisen. Die dritte Walze ist eine Gummi-Walze, um die Folien-Oberfläche zu strukturieren. Zur einseitigen Strukturierung der Folienoberfläche wurde eine Gummi-Walze eingesetzt. Die für die Strukturierung der Folienoberfläche verwendeten Gummi-Walzen werden in der DE 32 28 002 (oder dem US-Äquivalent 4 368 240) der Fa. Nauta Roll Corporation offenbart. Auf dem Glättkalander erfolgt die endgültige Formgebung und Abkühlung des Materials. Anschließend wird die Folie durch einen Abzug transportiert, es wird die Schutzfolie beidseitig aufgebracht, danach erfolgt die Aufwicklung der Folie.

**Tabelle 1**

| **Verfahrensparameter** | **Compound aus Beispiel Makrolon® 3108 550115/ 20 Gew.-% Masterbatch aus Beispiel 1** |
|---|---|
| Temperatur Extruder Z1 | 220°C |
| Temperatur Extruder Z2 | 280°C |
| Temperatur Extruder Z3 | 280°C |
| Temperatur Extruder Z4 | 280°C |
| Temperatur Extruder Z5 | 280°C |
| Temperatur Extruder Z6 | 280°C |
| Temperatur Umlenkkopf | 280°C |
| Temperatur Düse/Seitenplatte | 280°C |
| Temperatur Düse Z13 | 280°C |
| Temperatur Düse Z14 | 280°C |
| Temperatur Düse Z15 | 280°C |
| Temperatur Düse/Seitenplatte | 280°C |
| Temperatur Düse Z17 | 280°C |
| Temperatur Düse Z18 | 280°C |
| Temperatur Düse Z19 | 280°C |
| | |
| Drehzahl Extruder | 60 min⁻¹ |
| | |
| Drehzahl Schmelzepumpe | 44 min⁻¹ |
| | |
| Temperatur Walze 1 (Gummi-Walze) | 40°C |
| Temperatur Walze 2 | 100°C |
| Temperatur Walze 3 | 130°C |
| | |
| Kalandergeschwindigkeit | 13,8 m/min. |
| | |
| Durchsatz | 38 kg/h |
| Folien-Breite/-Dicke | 385 mm/100 µm |

### Beispiel 2

Es wurde ein Compound folgender Zusammensetzung abgemischt:
- Polycarbonat Makrolon 3108 550115 der Fa. Bayer MaterialScience AG mit einem Anteil von 96 Gew.-% und
- Masterbatch gemäß Beispiel 1 mit Kern-Schale-Teilchen mit einem Butadien/Styrol-Kern und einer Methylmethacrylat-Schale Paraloid EXL 5137 der Fa. Rohm & Haas mit einer Teilchengröße von 2 bis 15 µm und einer mittleren Teilchengröße von 8 µm mit einem Anteil von 4 Gew.-%.

Hieraus wurde eine einseitig strukturierte 300 µm Folie mit 0,8 Gew.-% Streu-Additiv extrudiert.

### Beispiel 3

Es wurde ein Compound folgender Zusammensetzung abgemischt:
- Polycarbonat Makrolon 3108 550115 der Fa. Bayer MaterialScience AG mit einem Anteil von 94 Gew.-% und
- Masterbatch gemäß Beispiel 1 mit Kern-Schale-Teilchen mit einem Butadien/Styrol-Kern und einer Methylmethacrylat-Schale Paraloid EXL 5137 der Fa. Rohm & Haas mit einer Teilchengröße von 2 bis 15 µm und einer mittleren Teilchengröße von 8 µm mit einem Anteil von 6 Gew.-%.

Hieraus wurde eine einseitig strukturierte 300 µm Folie mit 1,2 Gew.-% Streu-Additiv extrudiert.

### Beispiel 4

### Compoundierung:

Herstellung des Licht streuenden Masterbatch mit herkömmlichen Zweischnecken Compoundierextrudern (z.B. ZSK 32) bei für Polycarbonat üblichen Verarbeitungstemperaturen von 250 bis 330 °C.

Es wurde ein Master-Batch mit folgender Zusammensetzung hergestellt:
- Polycarbonat Makrolon 3108 550115 der Fa. Bayer MaterialScience AG mit einem Anteil von 80 Gew.-% und
- Acrylat Streu-Teilchen Techpolymer MBX-5 der Fa. Sekisui einer Teilchengröße von 2 bis 15 µm und einer mittleren Teilchengröße von 5 µm mit einem Anteil von 20 Gew.-%.

### Folienextrusion

Zur Extrusion von 300 µm dicken Polycarbonat-Folien einer Breite von 1340 mm wird das Compound eingesetzt.

Die verwendete Anlage besteht aus
- einem Extruder mit einer Schnecke von 105 mm Durchmesser (D) und einer Länge von 41xD. Die Schnecke weist eine Entgasungszone auf;
- einem Umlenkkopf;
- einer Breitschlitzdüse mit 1500 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- einer Einrichtung zum beidseitigen Aufbringen von Schutzfolie;
- einer Abzugseinrichtung;
- Aufwickelstation.

Von der Düse gelangt die Schmelze auf den Glättkalander, dessen Walzen die in der Tabelle 1 genannte Temperatur aufweisen. Auf dem Glättkalander erfolgt die endgültige Formgebung und Abkühlung des Materials. Zur einseitigen Strukturierung der Folienoberfläche wurde eine Gummi-Walze eingesetzt. Die für die Strukturierung der Folienoberfläche verwendeten Gummi-Walzen werden in der DE 32 28 002 (oder dem US-Äquivalent 4 368 240) der Fa. Nauta Roll Corporation offenbart. Anschließend wird die Folie durch einen Abzug transportiert, es wird die Schutzfolie beidseitig aufgebracht, danach erfolgt die Aufwicklung der Folie.

**Tabelle 2**

| Verfahrensparameter | Compound aus Beispiel (Makrolon® 3108 / 5 Gew.-% Masterbatch gemäß Beispiel 4) |
|---|---|
| Temperatur Extruder Z1 | 250°C |
| Temperatur Extruder Z2 | 250°C |
| Temperatur Extruder Z3 | 250°C |
| Temperatur Extruder Z4 | 250°C |
| Temperatur Extruder Z5 | 250°C |
| Temperatur Extruder Z6 | 250°C |
| Temperatur Extruder Z7 | 250°C |
| Temperatur Extruder Z8 | 260°C |
| Temperatur Extruder Z9 | 270°C |
| Temperatur Umlenkkopf | 300°C |
| Temperatur Düse/Z1 | 310°C |
| Temperatur Düse Z2 | 305°C |
| Temperatur Düse Z3 | 305°C |
| Temperatur Düse Z4 | 305°C |
| Temperatur Düse Z5 | 305°C |
| Temperatur Düse Z6 | 305°C |
| Temperatur Düse Z7 | 310°C |
| Temperatur Düse Z8 | 310°C |
| Temperatur Düse Z9 | 305°C |
| Temperatur Düse Z10 | 305°C |
| Temperatur Düse Z11 | 305°C |
| Temperatur Düse Z12 | 305°C |
| Temperatur Düse Z13 | 305°C |
| Temperatur Düse Z14 | 310°C |
| | |
| Drehzahl Extruder | 60 min⁻¹ |
| | |
| Temperatur Walze 1 (Gummi-Walze) | 82°C |
| Temperatur Walze 2 | 87°C |
| Temperatur Walze 3 | 138°C |
| | |
| Kalandergeschwindigkeit | 8 m/min. |
| | |
| Folien-Breite/-Dicke | 1340 mm/300 µm |

### Beispiel 5

Es wurde ein Compound folgender Zusammensetzung abgemischt:
- Polycarbonat Makrolon 3108 550115 der Fa. Bayer MaterialScience AG mit einem Anteil von 95 Gew.-% und
- Masterbatch gemäß Beispiel 4 mit Techpolymer MBX-5 der Fa. Sekisui mit einer Teilchengröße von 2 bis 15 µm und einer mittleren Teilchengröße von 5 µm mit einem Anteil von 5 Gew.-%.

Hieraus wurde eine einseitig strukturierte 300 µm Folie mit 1,2 Gew.-% Streu-Additiv extrudiert.

### Beispiel 6

Es wurde ein Compound folgender Zusammensetzung abgemischt:
- Polycarbonat Makrolon 3108 550115 der Fa. Bayer MaterialScience AG mit einem Anteil von 50 Gew.-% und
- Masterbatch gemäß Beispiel 4 mit Techpolymer MBX-5 der Fa. Sekisui mit einer Teilchengröße von 2 bis 15 µm und einer mittleren Teilchengröße von 5 µm mit einem Anteil von 50 Gew.-%.

Hieraus wurde eine einseitig strukturierte 300 µm Folie mit 10,0 Gew.-% Streu-Additiv extrudiert.

### Beispiel 7

### AFM-Untersuchungen

Extrusionsfolien mit Paraloid 5137 EXL und Techpolymer MBX-5
An den Extrusions-Folien der Beispiele 2 und 3 sowie 5 und 6 wurden AFM-Untersuchungen durchgeführt. An drei Präparaten wurden an drei Stellen wurden die Anzahl und Größe der nanoskaligen Partikel bestimmt und der Mittel gebildet. Die Ergebnisse sind in der folgenden Tabelle zusammengefasst.

**Tabelle 3**

| Beispiel | Durchschnittl. Zahl der nanoskaligen Teilchen mit einer Größe von 80 bis 200 nm/10 x 10 µm² | Konz. der nanoskaligen Teilchen [ppm] |
|---|---|---|
| Beispiel 2 | 6 | etwa 30 |
| Beispiel 3 | 9 | etwa 50 |
| | | |
| Beispiele 5 | 3 | etwa 10 |
| Beispiele 6 | 1 | etwa 2 |

### Optische Messungen

Die in den Beispielen 3 und 5 aufgeführten Folien wurden auf ihre optischen Eigenschaften nach folgenden Normen und mit folgenden Messgeräten untersucht:
Zur Bestimmung der Lichttransmission (Ty (C2°)) wurde ein Ultra Scan XE der Fa. Hunter Associates Laboratory, Inc. verwendet. Für die Lichtreflexion (Ry (C2°)) wurde ein Lambda 900 der Fa. Perkin Elmer Optoelectronics verwendet. Für die Haze-Bestimmung (nach ASTM D 1003) wurde ein Hazegard Plus der Fa. Byk-Gardner verwendet. Der Halbwertswinkel HW als Maß für die Stärke der Licht streuenden Wirkung wurde mit einem Goniophotometer nach DIN 58161 bestimmt. Die Leuchtdichtemessungen (Brightness-Messungen) wurden an einer Backlight-Unit (BLU) der Fa. DS LCD, (LTA320W2-L02, 32" LCD TV Panel, mit Hilfe eines Luminance Meter LS100 der Fa. Minolta durchgeführt. Hierbei wurde die serienmäßige Diffuserfolie entfernt und jeweils durch die in den Beispielen 3 bzw. 5 hergestellten Folien ersetzt.

### Optische Messergebnisse

**Tabelle 4**

| | Beispiel 3 | Beispiel 5 |
|---|---|---|
| Transmission [%] *(C2°) Hunter Ultra Scan* | 85,5 | 87,02 |
| Reflexion [%] *(C2°) Hunter Ultra Scan* | 10,6 | 10,42 |
| Haze [%] | 90,7 | 93 |
| Halbwertswinkel [°] | 8,5 | 6,8 |
| Brightness [cd/m²] ohne Folien | 6148 | 6078 |
| **Brightness [cd/m²] mit Folien** | **7065** | **7354** |

Bei den beiden in der Tabelle 4 aufgelisteten Beispielen 3 und 5 ist der Gehalt an Streupigmenten und die Licht streuende Schicht gleich und die Schichtdicke beträgt 300 µm. Auch das verwendete Basismaterial ist das gleiche. Überraschend ist vor allem, dass die Diffuserfolien aus Beispiel 5 die höchste Leuchtdichte in der BLU aufweisen.

Zur Messung der Brightness wurde wie folgt vorgegangen: Aus den Folien der Beispiele 3 und 5 wurden passende Stücke ausgeschnitten und in eine Backlight-Unit (BLU) der Fa. DS LCD, (LTA320W2-L02, 32" LCD TV Panel) eingebaut. Dazu wurde die Folie, die direkt auf der Diffuser-Platte der Backlight-Unit aufliegt, gegen die Folien aus den Beispielen ausgetauscht. Die Folien aus den Beispielen wurden so angeordnet, dass die glatte Seite auf die Diffuser-Platte gelegt wurde. Die beiden anderen Folien (Dual Brightness Enhancement Film [DBEF] and Brightness Enhancement Film [BEF]), die sich in der Backlight-Unit auf der ausgetauschten Folie befanden, wurden nach dem Austausch wieder in der Original-Reihenfolge und Anordnung auf die Folien aus den Beispielen aufgelegt. Die Reihenfolge war demnach folgende:
BEF
DBEF
Beispielfolie
Diffuser-Platte

Die Brightness wurde anschließend mit und ohne den in dieser Backlight-Unit verwendeten Foliensatz untersucht. Dabei wurde die Brightness and insgesamt 9 verschiedenen Stellen der Backlight-Unit gemessen (mit Hilfe eines Minolta Luminance Meter LS100) und der Mittelwert daraus berechnet.

Bei den Beispielen lässt sich erkennen, dass die Brightness mit der Anzahl der nanoskaligen Teilchen einhergeht. Je weniger dieser Teilchen vorhanden sind, desto besser ist die Brightness.

## Patentansprüche

1. Folien mit Dicken von 0,035 bis 1 mm enthaltend eine durch thermoplastische Verarbeitung hergestellte Kunststoffzusammensetzung enthaltend etwa 90 bis 99,95 Gewichts-% eines transparenten Kunststoffs, 0,01 bis 10 Gewichts-% transparenter, polymerer Teilchen mit einem mittleren Teilchendurchmesser, zwischen 1 und 100 µm und mit einer vom transparenten Kunststoff unterschiedlichen optischen Dichte, **dadurch gekennzeichnet, dass** die durch thermoplastische Verarbeitung hergestellte Kunststoffzusammensetzung bis zu 500 ppm an polymeren, transparenten Teilchen mit einem Teilchendurchmesser von 80 bis 200 nm aufweist.

2. Folien gemäß Anspruch 1, wobei es sich bei dem transparenten Kunststoff um Polycarbonat handelt.

3. Folien gemäß Anspruch 1, die mindestens eine Coextrusionsschicht aufweisen.

4. Folien gemäß einem der Ansprüche 1 bis 3, wobei die polymeren, transparenten Teilchen mit einem mittleren Teilchendurchmesser von im Wesentlichen zwischen 1 bis 100 µm und mit einer vom transparenten Kunststoff unterschiedlichen optischen Dichte Teilchen auf Acrylatbasis mit einer Kern-Schale-Morphologie sind.

5. Verwendung der Folie gemäß einem der Ansprüche 1 bis 4 als Diffusorfolie in Flachbildschirmen.

6. Backlight-Unit aufweisend eine Folie gemäß einem der Ansprüche 1 bis 4.

7. LCD-Flachbildschirm aufweisend eine Folie gemäß einem der Ansprüche 1 bis 4 oder eine Backlight-Unit gemäß Anspruch 6.

## Claims

1. Foils with thicknesses of 0.035 to 1 mm comprising a plastics composition produced by thermoplastic processing and comprising about 90 to 99.95% by weight of a transparent plastic, about 0.01 to 10% by weight of transparent polymer particles with average particle diameter between 1 and 100 µm and with an optical density differing from that of the transparent plastic, **characterized in that** the plastics composition produced by thermoplastic processing comprises up to 500 ppm of polymeric, transparent particles with a particle diameter of 80 to 200 nm.

2. Foils according to Claim 1, where the transparent plastic is polycarbonate.

3. Foils according to Claim 1 which comprise at least one coextruded layer.

4. Foils according to any of Claims 1 to 3, where the polymer, transparent particles with average particle diameter of in essence between 1 and 100 µm and with optical density differing from that of the transparent plastic are acrylate-based particles with core-shell morphology.

5. Use of the foil according to any of Claims 1 to 4 as diffuser foil in flat screens.

6. Backlight unit comprising a foil according to any of Claims 1 to 4.

7. LCD flat screen comprising a foil according to any of Claims 1 to 4 or a backlight unit according to Claim 6.

## Revendications

1. Feuilles dotées d'épaisseurs de 0,035 à 1 mm contenant une composition de plastique préparée par traitement thermoplastique contenant environ 90 à 99,95 % en poids d'un plastique transparent, environ 0,01 à 10 % en poids de particules transparentes, polymériques dotées d'un diamètre moyen de particule compris entre 1 et 100 µm et d'une densité optique différente du plastique transparent, **caractérisées en ce que** la composition de plastique préparée par traitement thermoplastique présente jusqu'à 500 ppm de particules polymériques, transparentes dotées d'un diamètre de particule de 80 à 200 nm.

2. Feuilles selon la revendication 1, le plastique transparent étant un polycarbonate.

3. Feuilles selon la revendication 1, qui présentent au moins une couche de coextrusion.

4. Feuilles selon l'une quelconque des revendications 1 à 3, les particules polymériques, transparentes dotées d'un diamètre moyen de particule essentiellement compris entre 1 et 100 µm et d'une densité optique différente du plastique transparent étant des particules à base d'acrylate dotées d'une morphologie de type noyau-enveloppe.

5. Utilisation de la feuille selon l'une quelconque des revendications 1 à 4 en tant que feuille diffusante dans des écrans plats.

6. Unité de lumière noire présentant une feuille selon l'une quelconque des revendications 1 à 4.

7. Écran plat LCD présentant une feuille selon l'une quelconque des revendications 1 à 4 ou une unité de lumière noire selon la revendication 6.
